# EUROPEAN PATENT APPLICATION

(11) **EP 4 636 978 A1**
(43) Date of publication of application: **22.10.2025**
(21) Application number: 24741328.9
(22) Date of filing: 11.01.2024
(51) Int. Cl.: H02J 3/38, H02J 3/32, B60L 53/51, H01M 50/296, H01M 50/569

(54) **PHOTOVOLTAIC ENERGY STORAGE SYSTEM**

(30) Priority: 12.01.2023 CN 202310040011; 30.10.2023 CN 202311425146
(71) Applicant: Shanghai Sigeyuan Intelligent Technology Co., Ltd, Shanghai 201304 (CN)
(72) Inventor: LIU, Xinwei, Shanghai 201304 (CN)
(74) Representative: 2K Patentanwälte Blasberg Kewitz & Reichel
(86) International application number: PCT/CN2024/071836
(87) International publication number: WO 2024/149332

(57) **Abstract**

The present application relates to the field of photovoltaic storage and charging technology, and specifically to a photovoltaic energy storage system, including at least two modularized chambers; a power conversion system coupled to a DC bus, and at least one of a photovoltaic module, an energy storage module, and a DC charging module; where the power conversion system is disposed in one of the modularized chambers; and at least one of the photovoltaic module, the energy storage module, and the DC charging module is disposed in another of the modularized chambers.

## Description

### TECHNICAL FIELD

The present application relates to the field of energy storage technology, and in particular to a photovoltaic energy storage system.

### BACKGROUND

In the existing photovoltaic energy storage system product solutions, PV panels, power conversion systems, energy storage units, etc. are all independent modules and are not truly integrated in product form. They belong to split photovoltaic storage and charging systems. The problem this brings is that the wiring between the modules is complicated and cumbersome.

In addition, in the existing split-type photovoltaic energy storage system, the energy storage unit and the power conversion system use AC coupling to transfer energy through the AC power grid, which has the problems of long energy transfer path and low efficiency.

### SUMMARY

In view of the above-mentioned shortcomings of the conventional technique, the purpose of the present application is to provide a photovoltaic energy storage system to solve the technical problems of complex wiring between components of the existing photovoltaic energy storage system, high installation cost, and low efficiency of AC coupling.

The present application provides a photovoltaic energy storage system, including: at least two modularized chambers; a power conversion system coupled to a DC bus; and at least one of a photovoltaic module, an energy storage module, and a DC charging module, the at least one of the photovoltaic module, the energy storage module, and the DC charging module coupled to the DC bus, wherein the power conversion system is disposed in one of the modularized chambers; and at least one of the photovoltaic module, the energy storage module, and the DC charging module is disposed in another one of the modularized chambers.

In one or more embodiments of the present application, the modularized chamber is provided with a DC bus plug-in port, and the modularized chambers are connected through the DC bus after being assembled.

In one or more embodiments of the present application, the modularized chamber provided with the energy storage module includes: a first plug-in port including a first operating terminal and first detecting terminals, wherein the first detecting terminals are disposed in pairs, a control device is provided between the first operating terminal, the first detecting terminal, and the energy storage module, and the control device is configured to enable the energy storage module to be connected to the first operating terminal when the first detecting terminals are short-circuited, and to disconnect the energy storage module from the first operating terminal when the first detecting terminals are disconnected from each other.

In one or more embodiments of the present application, at least two pairs of the first detecting terminals are provided, and the control device is configured to enable the energy storage module to be connected to the first operating terminal when all pairs of the first detecting terminals are short-circuited, and to disconnect the energy storage module from the first operating terminal when any pair of the detecting terminals is disconnected.

In one or more embodiments of the present application, a second plug-in port is further included, wherein a second plug-in port includes a second operating terminal and second detecting terminals, the second detecting terminals are disposed in pairs, the number and arrangement of the second operating terminal are consistent with the number and arrangement of the first operating terminal, the number and arrangement of the second detecting terminals are consistent with the number and arrangement of the first detecting terminals, and the second operating terminals are electrically connected to the first operating terminal or the energy storage module.

In one or more embodiments of the present application, the second detecting terminal is electrically connected to the first detecting terminal; or the second detecting terminals are short-circuited with each other.

In one or more embodiments of the present application, the length of at least one of the second detecting terminals is smaller than the length of the second operating terminal.

In one or more embodiments of the present application, the length of at least one of the first detecting terminals is smaller than the length of the first operating terminal.

In one or more embodiments of the present application, the modularized chamber provided with the power conversion system includes: a third plug-in port, including a third operating terminal and third detecting terminals, wherein the third detecting terminals are disposed in pairs; and the third detecting terminals are short-circuited with each other, or the third detecting terminals are configured to be switchable between short-circuited and disconnected states.

In one or more embodiments of the present application, at least two pairs of the third detecting terminals are provided.

In one or more embodiments of the present application, at least one pair of the third detecting terminals is configured to be switchable between short-circuited and disconnected states.

In one or more embodiments of the present application, the length of at least one of the third detecting terminals is smaller than the length of the third operating terminal.

In one or more embodiments of the present application, two of the modularized chambers arranged up and down are communicatively connected by a plug-in port.

In one or more embodiments of the present application, the energy storage module includes an energy storage battery and a bidirectional DCDC converter, and the energy storage battery is connected to the DC bus through the bidirectional DCDC converter.

In one or more embodiments of the present application, the energy storage module includes a battery management system, which is connected to the energy storage battery, and the battery management system is used to protect the energy storage battery from overcharging and over-discharging.

In an embodiment of the present application, the photovoltaic energy storage system includes: three modularized chambers; and the power conversion system, the photovoltaic module, the energy storage module, and the DC charging module coupled to the DC bus, wherein the power conversion system and the photovoltaic module are disposed in one of the modularized chambers; the energy storage module is disposed in another one of the modularized chambers; the DC charging module is disposed in a third one of the modularized chambers.

In one or more embodiments of the present application, the photovoltaic energy storage system includes: three modularized chambers; and the power conversion system, the photovoltaic modules, the energy storage module, and the DC charging module coupled to the DC bus, wherein the power conversion system is disposed in one of the modularized chambers; the energy storage module and one photovoltaic module are disposed in another one of the modularized chambers; the DC charging module and the other photovoltaic module are disposed in a third one of the modularized chambers.

In one or more embodiments of the present application, a photovoltaic module is also disposed in the modularized chamber in which the power conversion system is arranged.

The present application also provides a photovoltaic energy storage system, including: at least two modularized chambers; a power conversion system coupled to a DC bus; and at least one of a photovoltaic module, an energy storage module, and a DC charging module, the at least one of the photovoltaic module, the energy storage module, and the DC charging module coupled to the DC bus; wherein the power conversion system is disposed in one of the modularized chambers; at least one of the photovoltaic module, the energy storage module, and the DC charging module is disposed in another one of the modularized chambers; and the number of the energy storage module is greater than or equal to the number of the photovoltaic module, or the number of the energy storage module is greater than or equal to the number of the DC charging module.

The present application also provides a photovoltaic energy storage system, including: a photovoltaic component; a power conversion system, a photovoltaic module, and an energy storage module coupled to a DC bus, wherein the power conversion system is disposed in one of the modularized chambers and is externally connected to an AC power grid, the energy storage module is disposed in another one of the modularized chambers, and the photovoltaic module is connected to the photovoltaic component, the photovoltaic module and the power conversion system or the energy storage module are disposed in a same modularized chamber, or the photovoltaic module is disposed in a third one of the modularized chambers.

The present application also provides a photovoltaic energy storage system, including: a photovoltaic component; an AC power grid; a power conversion system, a photovoltaic module, and an energy storage module coupled to a DC bus, wherein the power conversion system is connected to the AC power grid, and the power conversion system is disposed in one of the modularized chambers, the energy storage module is disposed in another one of the modularized chambers, and the photovoltaic module is connected to the photovoltaic component, the photovoltaic module, and the power conversion system or the energy storage module are disposed in a same modularized chamber, or the photovoltaic module is disposed in a third one of the modularized chambers.

In one or more embodiments of the present application, a DC charging module coupled to the DC bus is also included; the DC charging module and one of the power conversion systems, the energy storage module, and the photovoltaic module are disposed in the same modularized chamber, or the DC charging module is disposed in a fourth one of the modularized chambers.

The photovoltaic energy storage system of the present application includes at least two modularized chambers; a power conversion system coupled to a DC bus, and at least one of a photovoltaic module, an energy storage module, and a DC charging module; where the power conversion system is disposed in one of the modularized chambers; and at least one of the photovoltaic module, the energy storage module, and the DC charging module is disposed in another of the modularized chambers. The present application deeply integrates the photovoltaic, the power conversion system, the energy storage units, and charging piles in product form. One product integrates multiple functional modules, and each module is connected through an internal DC bus so that the energy transfer path is shorter and the efficiency is higher.

The photovoltaic energy storage system of the present application can improve the electrical reliability of the photovoltaic energy storage system and reduce safety hazards by introducing detecting terminals into the plug-in port of the modularized chamber integrating the energy storage module and control design based on the detecting terminals.

### BRIEF DESCRIPTION OF DRAWINGS

FIG. 1 is a schematic diagram of an AC/DC hybrid system in a specific embodiment of the present application.
FIG. 2 is a schematic diagram of a structure of a photovoltaic energy storage system in a specific embodiment of the present application.
FIG. 3 is a schematic diagram of a structure of a photovoltaic energy storage system in a specific embodiment of the present application.
FIG. 4 is a schematic diagram of a structure of a photovoltaic energy storage system in a specific embodiment of the present application.
FIG. 5 is a schematic diagram of a structure of an energy storage unit in a specific embodiment of the present application.
FIG. 6 is a schematic diagram of a structure of an energy storage unit in a specific embodiment of the present application.
FIG. 7 is a schematic diagram of a structure of an energy storage control device in a specific embodiment of the present application.
FIG. 8 is a schematic diagram of a structure of a photovoltaic energy storage system in a specific embodiment of the present application.
FIG. 9 is a schematic structural diagram of a photovoltaic energy storage system in a specific embodiment of the present application.

### DESCRIPTION OF EMBODIMENTS

The following describes the implementation of the present application through specific examples, and those skilled in the art can easily understand other advantages and effects of the present application from the contents disclosed in this specification. The present application can also be implemented or applied through other different specific implementations, and the details in this specification can also be modified or changed in various ways based on different viewpoints and applications without departing from the present application.

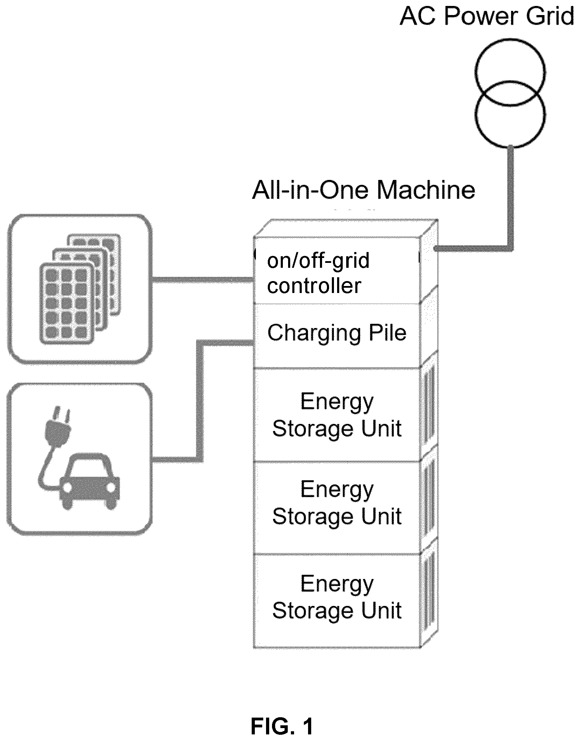

In order to solve the technical problems of complex wiring, high installation cost, and low efficiency of AC coupling between components of the existing photovoltaic storage and charging system, the embodiments of the present application disclose a photovoltaic energy storage system as shown in FIGS. 1 to 4.

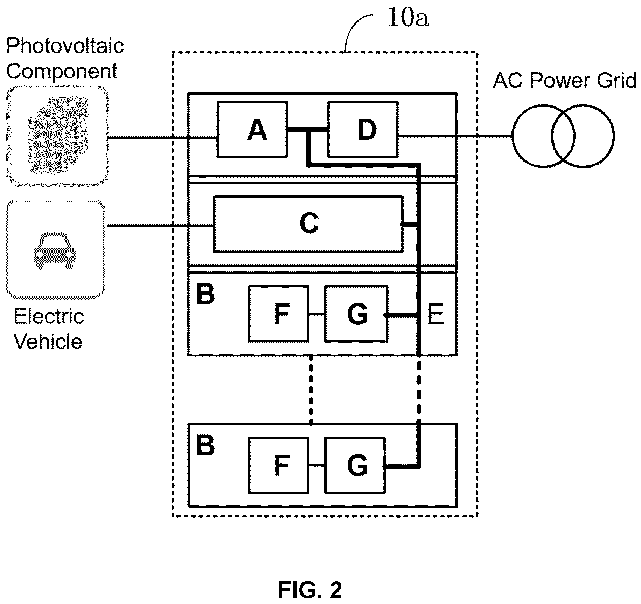

As shown in FIGS. 1 to 4, the photovoltaic energy storage system 10a, 10b, and 10c may include: a DC bus E (the thickest line in FIGS. 2 to 4), a power conversion system D coupled to the DC bus E, and one or more of a photovoltaic module A, an energy storage module B, and a DC charging module C, the one or more of the photovoltaic module A, the energy storage module B, and the DC charging module C coupled to the DC bus E.

The power conversion system D serves as an on-grid and off-grid controller, one end of which is connected to the DC bus E, and the other end is externally connected to the AC power grid. The power conversion system D is used to control the connectivity between the photovoltaic energy storage system and an AC bus, thereby controlling the photovoltaic energy storage system to be connected to the AC power grid or disconnected from the AC power grid.

One end of the photovoltaic module A is connected to the DC bus E, and the other end is externally connected to a photovoltaic component. The photovoltaic module A is used to convert the voltage output by the photovoltaic component into an input voltage of the DC bus E to achieve a maximum power output of the photovoltaic component.

The energy storage module B is connected to the DC bus E as an energy storage unit. The energy storage module B is used to store the electric energy output by the DC bus E, or output electric energy to the DC bus E. In one or more embodiments, the energy storage module B includes an energy storage battery F and a bidirectional DCDC converter G, and the energy storage battery F is connected to the DC bus E through the bidirectional DCDC converter G, and the bidirectional DCDC converter G is used to realize bidirectional conversion between the voltage of the DC bus E and the energy storage voltage of the energy storage battery F during the charging and discharging process of the energy storage battery F.

In one or more embodiments, the energy storage module B may further include a battery management system, which is connected to the energy storage battery F, and is used to protect the energy storage battery F from overcharging and over-discharging.

The DC charging module C is used as a charging pile, one end of which is connected to the DC bus E, and the other end is connected to the charging port of the electric vehicle. The DC charging module C is used to connect to the electric vehicle to charge the electric vehicle using the electric energy output by the DC bus E. In one or more embodiments, the DC charging module C obtains electric energy from the DC bus E and provides charging services for the electric vehicle power battery pack according to the requirements of the battery management system (BMS) of the power battery of the electric vehicle. When charging the electric vehicle, since different electric vehicles have different charging parameters, the DC charging module C can convert the voltage output by the DC bus E into a suitable voltage, power, etc. according to the charging parameters of each electric vehicle before charging the electric vehicle. The electric energy used by the DC charging module C to charge the electric vehicle can come from the electric energy of the AC power grid that is converted and input by the power conversion system D to the DC bus E, or from the electric energy converted and output by the photovoltaic module A to the DC bus E through the light-to-energy conversion of the photovoltaic component, or from the electric energy output to the DC bus E when the energy storage is discharged.

In one or more embodiments, the power conversion system D, the photovoltaic module A, the energy storage module B, or the DC charging module C can be disposed in a separate modularized chamber, or the power conversion system D, the photovoltaic module A, the energy storage module B or the DC charging module C is disposed in a same modularized chamber together with at least one other module. Taking the power conversion system D as an example, it can be disposed in one modularized chamber with the photovoltaic module A, the energy storage module B, or the DC charging module C, and can also be disposed in one modularized chamber with any two of the photovoltaic module A, the energy storage module B and the DC charging module C, or the photovoltaic module A, the energy storage module B and the DC charging module C can be disposed in one modularized chamber.

Several of the modularized chambers can be stacked up and down to form a photovoltaic energy storage system (also called an all-in-one machine), including several interconnected DC buses E, each DC bus E is set in one of the modularized chambers, and the DC bus E in each modularized chamber is connected to the module in the corresponding modularized chamber. Through modular design, the photovoltaic, energy storage, DC charging, and power conversion systems are modularly disposed into chambers, so that the photovoltaic module A, the power conversion system D, the energy storage module B, and the DC charging module C are deeply integrated in product form. One product is set with multiple functions as one, which is more convenient and efficient in installation and wiring compared to conventional photovoltaic storage and charging. In addition, the connection method of each functional module using the common DC bus E is adopted, which makes the energy transfer path shorter and more efficient.

In one or more embodiments, a plug-in port is used between the upper and lower modularized chambers to realize the electrical connection between the DC buses, and a plug-in port is used for a communication connection between the upper and lower modularized chambers, that is, each modularized chamber is provided with a plug-in port of the DC bus E, and the modularized chambers are connected through the DC bus E after being combined. The wiring method can be simplified by means of the plug-in port, and the installation and wiring are convenient and quick.

It can be understood that, in one or more embodiments, the electrical connection between the DC bus E can be achieved by only using a plug-in port between the upper and lower modularized chambers, and the communication between the upper and lower modularized chambers can be achieved in a useful wireless manner.

In one or more embodiments, in order to meet actual energy storage and charging needs, it is necessary to ensure that the number of the energy storage modules B is greater than or equal to the number of the photovoltaic modules A, or the number of the energy storage modules B is greater than or equal to the number of the DC charging modules C.

The following will describe the arrangement of the photovoltaic energy storage system of the present application in conjunction with three specific embodiments.

FIG. 2 shows a photovoltaic energy storage system 10a. As shown in FIG. 2, the photovoltaic energy storage system 10a includes a power conversion system D, a photovoltaic module A, an energy storage module B, and a DC charging module C, and the power conversion system D, the photovoltaic module A, the energy storage module B, and the DC charging module C are respectively connected to the DC bus E. The power conversion system D and the photovoltaic module A are disposed in one of the modularized chambers, and each of the energy storage modules B and each of the DC charging modules C are respectively disposed in one of the modularized chambers.

In one or more embodiments, the photovoltaic module A and the power conversion system D are in the same modularized chamber. one end of the photovoltaic module A is connected to the photovoltaic component, and the other end of the photovoltaic module A is connected to the DC bus E, one end of the power conversion system D is connected to the DC bus E, and the other end of the power conversion system D is connected to the AC power grid; the DC charging module C is disposed in a separate modularized chamber, one end of the DC charging module C is connected to the DC bus E, and the other end of the DC charging module C is connected to the charging port of the electric vehicle the energy storage module B; each energy storage module B is disposed in a separate modularized chamber, and the energy storage module B is connected to the DC bus E. The photovoltaic energy storage system 10a, together with the external AC power grid and the photovoltaic component, constitutes an AC/DC hybrid system.

In a typical application scenario, the number of the photovoltaic module A, the number of the power conversion system, and the number of the DC charging module C are all 1, and the number of the energy storage module B is greater than 1.

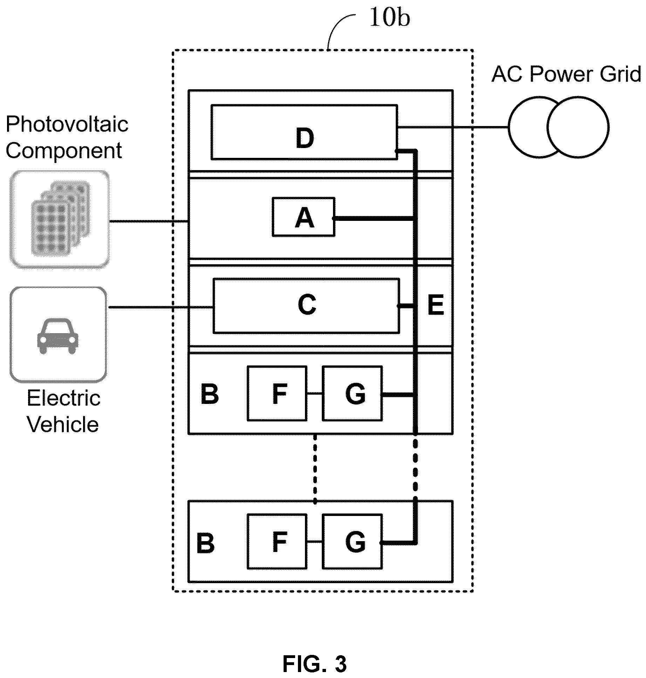

FIG. 3 shows another photovoltaic energy storage system 10b. As shown in FIG. 3, the photovoltaic energy storage system 10b includes a power conversion system D, a photovoltaic module A, an energy storage module B, and a DC charging module C, and the power conversion system D, the photovoltaic module A, the energy storage module B, and the DC charging module C are respectively connected to the DC bus E. Each of the power conversion system D, the photovoltaic module A, the energy storage module B, and the DC charging module C is disposed in a separate modularized chamber.

In one or more embodiments, the power conversion system D is disposed in a separate modularized chamber, one end of the power conversion system D is connected to the DC bus E, and the other end of the power conversion system D is connected to the AC power grid; the photovoltaic module A is disposed in a separate modularized chamber, one end of the photovoltaic module A is connected to the photovoltaic component, and the other end of the photovoltaic module A is connected to the DC bus E; the DC charging module C is disposed in a separate modularized chamber, one end of the DC charging module C is connected to the DC bus E, and the other end of the DC charging module C is connected to the charging port of the electric vehicle; each of the energy storage modules B is disposed in a separate modularized chamber, and the energy storage module B is connected to the DC bus E. The photovoltaic energy storage system 10b, together with the external AC power grid and the photovoltaic component, constitutes an AC/DC hybrid system.

In a typical application scenario, the number of the photovoltaic module A, the number of the power conversion system, and the number of the DC charging module C are all 1, and the number of the energy storage module B is greater than 1.

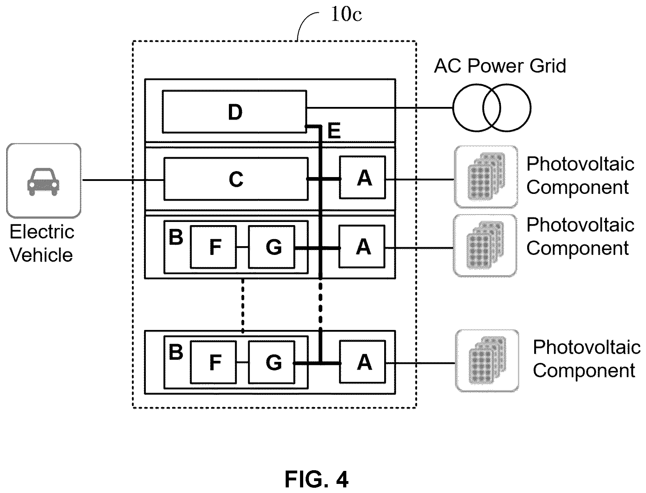

FIG. 4 shows another photovoltaic energy storage system 10c. As shown in FIG. 4, the photovoltaic energy storage system 10c includes a power conversion system D, a photovoltaic module A, an energy storage module B, and a DC charging module C. The power conversion system D, the photovoltaic module A, the energy storage module B, and the DC charging module C are respectively connected to the DC bus E. There is more than one photovoltaic module A, and each photovoltaic module A is connected to a photovoltaic component. Each DC charging module C is disposed in the same modularized chamber together with one photovoltaic module A. Each energy storage module B is disposed in the same modularized chamber together with one photovoltaic module A.

In one or more embodiments, the power conversion system D is disposed in a separate modularized chamber, one end of the power conversion system D is connected to the DC bus E, and the other end of the power conversion system D is connected to the AC power grid; each of the DC charging modules C and one of the photovoltaic modules A are disposed in a same modularized chamber; in the same modularized chamber, one end of the DC charging module C is connected to the DC bus E, and the other end of the DC charging module C is connected to the charging port of the electric vehicle, one end of the photovoltaic module A is connected to a photovoltaic component, and the other end of the photovoltaic module A is connected to the DC bus E; each of the energy storage modules B and one of the photovoltaic modules A are disposed in a same modularized chamber, in the same modularized chamber, the energy storage module B is connected to the DC bus E, one end of the photovoltaic module A is connected to a photovoltaic module, and the other end of the photovoltaic module A is connected to the DC bus E. The photovoltaic energy storage system 10c, together with the external AC power grid and photovoltaic modules, constitutes an AC/DC hybrid system.

It is understandable that a photovoltaic module A similar to that shown in FIG. 2 may also be provided in the modularized chamber of the power conversion system D shown in FIG. 4.

The photovoltaic energy storage system of the present application adopts a modular design, and the photovoltaic, the energy storage, the DC charging, and the power conversion systems are modularly disposed into chambers, thereby deeply integrating the photovoltaic modules and power conversion systems, energy storage modules, and DC charging modules in product form. One product integrates the above multiple functions, and is more convenient and efficient in installation and wiring than traditional photovoltaic storage and charging. In addition, the functional modules use a connection method of sharing a common DC bus, which makes the energy transfer path shorter and more efficient.

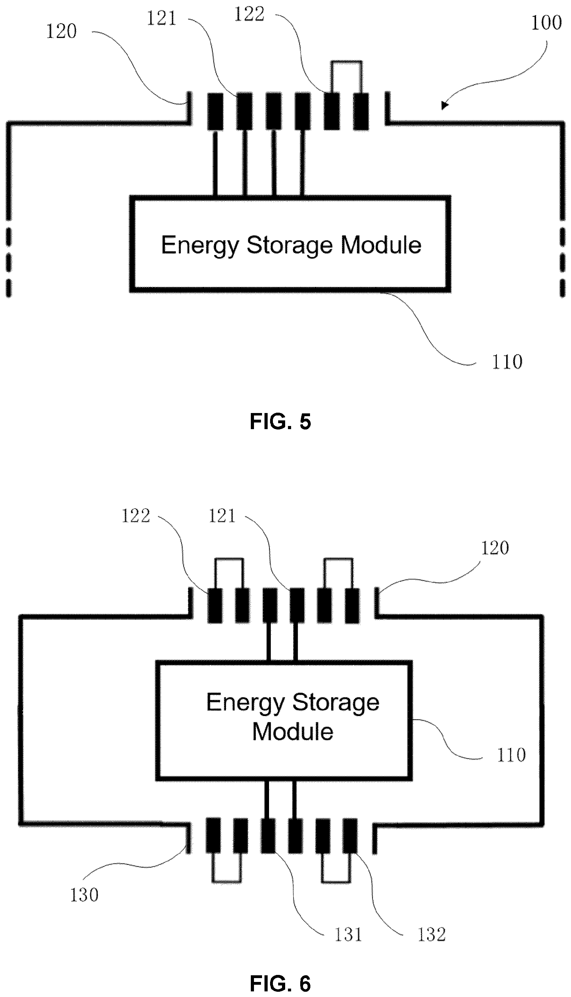

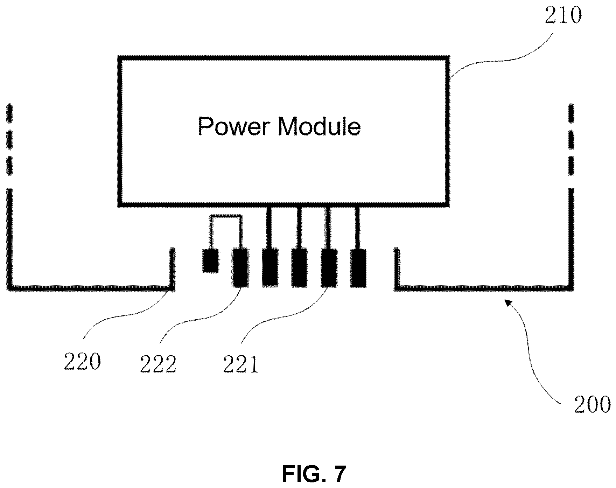

It should be noted that although modularization can make the expansion of the energy storage system more convenient, it is necessary to ensure that the plug-in port contact between the modularized chambers is electrically reliable. In addition, when a modularized chamber is abnormally physically disconnected, the voltage of the plug-in port needs to be reduced to below the safe voltage to avoid exposure of the external port and causing harm to personnel. Based on this, the embodiment of the present application also discloses a plug-in port design scheme that can be applied to each modularized chamber in the photovoltaic energy storage system. The following will take two modularized chambers using such a plug-in port as an example for explanation, one modularized chamber is the energy storage unit of FIGS. 5 and 6, and the other modularized chamber is the energy storage control device shown in FIG. 7.

As shown in FIG. 5 and FIG. 6, the energy storage unit 100 refers to a modularized chamber integrated with an energy storage module 110, The energy storage unit 100 includes the energy storage module 110, a first plug-in port 120, and a second plug-in port 130. The energy storage module 110 is disposed inside the energy storage unit 100 for outputting electric energy. The first plug-in port 120 and the second plug-in port 130 are arranged on the outer housing of the energy storage unit 100 as external plug-in ports, which can be used to connect multiple energy storage units 100 in series, or to be plugged in with other modularized chambers of the photovoltaic energy storage system (such as a modularized chamber integrated with a power conversion system) to form an energy storage system. This plug-in design is convenient for transportation and installation.

In one or more embodiments, the first plug-in port includes a first operating terminal 121 and first detecting terminals 122, and first detecting terminals 122 are disposed in pairs. The first detecting terminal 122 is used to detect the connection state of the first plug-in port 120, and a control device (not shown) is also provided in the energy storage unit 100100 to connect or disconnect the line between the first operating terminal 121 and the energy storage module 110 according to the detection result of the first detecting terminal 122, so that when the first plug-in port 120 is connected, the energy storage module 110 can output the operating voltage through the first operating terminal 121, and stop outputting after the first plug-in port 120 is disconnected, so as to avoid causing harm to personnel.

In one or more embodiments, since the first detecting terminals 122 are disposed in pairs, when the first detecting terminals 122 are short-circuited, the control device connects the line between the first operating terminal 121 and the energy storage module 110; when the first detecting terminals 122 are disconnected from each other, the control device cuts off the line between the first operating terminal 121 and the energy storage module 110 to ensure electrical reliability at the first plug-in port 120. The control device may be a battery management system or other control unit independent of the battery management system.

Furthermore, multiple pairs of first detecting terminals 122 may be provided, and preferably, a pair of first detecting terminals 122 may be provided at each end of the first plug-in port 120. Accordingly, the control device will connect the line between the first operating terminal 121 and the energy storage module 110 only when all pairs of first detecting terminals 122 are short-circuited with each other; and when any pair of first detecting terminals 122 is disconnected, the control device immediately cuts off the line between the first operating terminal 121 and the energy storage module 110, which greatly improves the electrical reliability at the first plug-in port 120 and avoids potential safety hazards.

It should be noted that the number and positions of the first detecting terminals 122 can be adjusted according to specific applications, and this embodiment is only used as a preferred embodiment to illustrate its functions and effects.

Similarly, the second plug-in port 130 can be configured in the same manner as the first plug-in port 120, so as to facilitate plugging and combining with the first plug-in port or the second plug-in port of the other energy storage unit 100. In one or more embodiments, the second plug-in port 130 includes a second operating terminal 131 and second detecting terminals 132, and the second detecting terminals 132 are disposed in pairs. Preferably, the arrangement of the second operating terminal 131 and the second detecting terminal 132 is consistent with the arrangement of the first operating terminal 121 and the first detecting terminal 122, so as to facilitate a short circuit between the second operating terminal 131 and the first operating terminal 121, and short circuit between the first detecting terminal 122 and the second detecting terminal 132. When either the first plug-in port 120 or the second plug-in port 130 is plugged in, the first operating terminal 121, the energy storage module 110, and the second operating terminal 131 are connected.

In application, if multiple energy storage units 100 are combined, the energy storage modules in each energy storage unit 100 can be connected in series through the first operating terminal 121 and the second operating terminal 131, and one idle plug-in port of the multiple energy storage units 100 connected in series is used as an output terminal to output the operating voltage, and the other idle plug-in port can be electrically isolated by installing a protective housing. For example, multiple energy storage units 100 are combined, and adjacent energy storage units 100 can be plugged in with each other through their respective first plug-in ports 120, or their respective second plug-in ports 130, or the first plug-in port 120 of one energy storage unit 100 is plugged in with the second plug-in port 130 of another energy storage unit 100. After the combination is completed, only the two outermost plug-in ports remain idle, including two first plug-in ports 120, or two second plug-in ports 130, or one first plug-in port 120 and one second plug-in port 130. Electric energy can be output through one of the idle plug-in ports, and the other idle plug-in port is electrically isolated to ensure electrical reliability.

Furthermore, the second detecting terminals 132 can be directly short-circuited, and can be correspondingly connected to the first detecting terminal 122 on the first plug-in port of another energy storage unit 100, so that the first detecting terminal 122 of the other energy storage unit 100 is short-circuited, and the energy storage module 110 of the other energy storage unit 100 is connected to the first operating terminal 131 to achieve electric energy output. This design facilitates the combination of multiple energy storage units 100.

In addition, the control device can also control the first plug-in port 120 and the second plug-in port 130 respectively. In one or more embodiments, the second operating terminal 131 can be connected to the energy storage module 110, and the control device connects or disconnects the line between the second operating terminal 131 and the energy storage module 110 according to the detection result of the second detecting terminal 132, so that when the second plug-in port 130 is connected, the energy storage module 110 can output the operating voltage through the second operating terminal 131, and stop outputting after the second plug-in port 130 is disconnected.

In a specific embodiment, the length of the first detecting terminal 122 is less than the length of the first operating terminal 121, so that the end plane of the first detecting terminal 122 is shorter than the end plane of the first operating terminal 121. When the first plug-in port 120 is connected, if the first detecting terminal 122 has been short-circuited, the first operating terminal 121 is also assembled in place accordingly, thereby avoiding the situation in which the first detecting terminal 122 is connected while the first operating terminal 121 is not connected in place, resulting in leakage causing harm to personnel. Similarly, the length of the second detecting terminal 132 is less than the length of the second operating terminal 131, further enhancing the electrical reliability of the first plug-in port 120 and the second plug-in port 130 of the energy storage unit 100, greatly ensuring the personal safety of users and reducing safety hazards.

As shown in FIG. 7, the energy storage control device 200 includes a power module 210 and a third plug-in port 220. The power module 210 is disposed inside the energy storage control device 200, and can perform corresponding control on the energy storage unit 100, or other functions, depending on the actual needs of the application. The third plug-in port 220 is also arranged on the outer housing of the energy storage control device 200, and is connected to the port on the energy storage unit 100 as a connection port. It should be noted that the power module 210 does not refer to the same thing in different chambers. When the energy storage control device 200 is a modularized chamber in which a power conversion system is integrated with the above-mentioned photovoltaic energy storage system, the power module 210 may refer to the inverter module in the power conversion system.

Correspondingly, the third plug-in port 220 also needs to ensure its electrical reliability. In one or more embodiments, the third plug-in port 220 includes a third operating terminal 221 and a third detecting terminal 222, and the third detecting terminal 222 is disposed in pairs. The third detecting terminals 222 are short-circuited with each other, or are configured to be able to switch between short-circuited and disconnected states. The third operating terminal 221 is connected to the power module 210, and when connected to the energy storage unit 100, it can receive the electric energy output by the energy storage unit 100 or transmit electric energy to the energy storage unit 100.

In a specific application, the energy storage control device 200 is, for example, a modularized chamber integrated with a power conversion system, and the corresponding power module 210 can be an inverter module in the power conversion system. The third operating terminal 221 can transmit the DC power output by the energy storage unit 100 to the inverter module, invert it into AC power, and then output it. The third detecting terminal 222 applies an enable signal to corresponding detecting terminals on the energy storage unit 100 by short-circuiting them, so that the energy storage unit 100 starts to output the operating voltage.

In a specific embodiment, multiple pairs of third detecting terminals 222 may be provided, and the number and position are provided corresponding to the detecting terminals on the energy storage unit 100, so as to apply an enable signal to the detecting terminals on the energy storage unit 100 by short-circuiting them. Preferably, a pair of third detecting terminals 222 may be provided at each end of the third plug-in port 220, so as to ensure that the third detecting terminal 222 and the third operating terminal 221 are connected to the corresponding terminal on the energy storage unit 100 when the third plug-in port 220 is connected to the corresponding port on the energy storage unit 100. In one or more embodiments, a pair of fixed third detecting terminals 222 and a pair of adjustable third detecting terminals 222 may be provided, that is, a pair of short-circuited third detecting terminals 222 and a pair of third detecting terminals 222 whose connection state can be switched by a switch. When the energy storage control device 200 and the energy storage unit 100 are assembled, the adjustable third detecting terminal 222 may be short-circuited by controlling the switch, so as to apply two enable signals to the energy storage unit 100, and the energy storage unit 100 starts to work only when two enable signals are received. Therefore, before the energy storage control device 200 and the energy storage unit 100 are installed, the switch can be adjusted to the state where the third detecting terminal 222 is disconnected to avoid electricity leakage of the energy storage unit 100 during installation and causing harm to personnel. After installation, the switch is adjusted to the state where the third detecting terminal 222 is short-circuited. Before the energy storage control device 200 and the energy storage unit 100 are disassembled, the switch is adjusted again to the state where the third detecting terminal 222 is disconnected to avoid electricity leakage of the energy storage unit 100 during disassembly and causing harm to personnel, thereby greatly improving electrical reliability and effectively ensuring the personal safety of personnel.

It should be noted that the number and position of the third detecting terminals 222 can be adjusted according to the specific application. They can be all fixed, or all adjustable, or multiple pairs of fixed and multiple pairs of adjustable, all of which fall within the scope of protection of the present application. This embodiment is only used as a preferred embodiment to illustrate its function and role.

In a specific embodiment, the length of the third detecting terminal 222 is less than the length of the third operating terminal 221, so that the end plane of the third detecting terminal 222 is shorter than the end plane of the third operating terminal 221. When the third plug-in port 220 is correspondingly plugged in, connection time of the third detecting terminal 222 is later than the connection time of the third operating terminal 221; when the third plug-in port 220 is correspondingly disassembled, the disconnection time of the third detecting terminal 222 is earlier than the disconnection time of the third operating terminal 221, thereby avoiding the situation in which the third detecting terminal 222 is connected while the third operating terminal 221 is not connected in place, and the situation in which the third detecting terminal 222 is disconnected while the third operating terminal 221 is not completely disconnected, resulting in electricity leakage causing harm to personnel, thereby reducing safety hazards.

It should be noted that the energy storage control device 200 can of course also be provided with multiple plug-in ports similar to the energy storage unit 100, which can be In one or more embodiments provided according to actual application requirements. This embodiment is only a preferred embodiment.

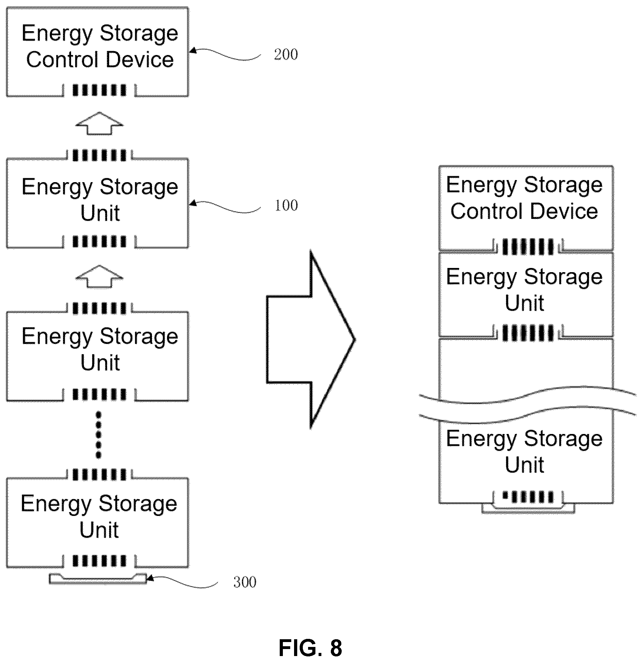

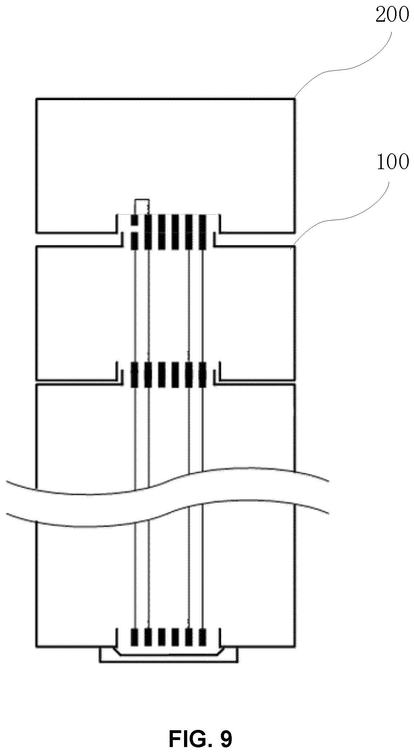

As shown in FIG. 8 and FIG. 9, when the energy storage unit 100 and the energy storage control device 200 are stacked to form a photovoltaic energy storage system, the first plug-in port 120 or the second plug-in port 130 of the energy storage unit 100 is correspondingly plugged with the third plug-in port of the energy storage control device 200. When multiple energy storage units 100 are included, the energy storage units 100 can be plugged in through their respective first plug-in ports 120 or second plug-in ports 130, or the first plug-in port 120 of one energy storage unit 100 is plugged in with the second plug-in port 130 of another energy storage unit 100, so as to combine and connect the energy storage units 100 in series to increase the output operating voltage. After the combination, there is one idle plug-in port left at each end of the combined energy storage units 100, and any one of the idle plug-in ports can be plugged in correspondingly with the energy storage control device 200, and the other idle plug-in port is provided with a protective housing 300 for electrical isolation to ensure the electrical reliability of the energy storage system.

In a specific embodiment, as shown in FIGS. 8 and 9, when the energy storage unit 100 and the energy storage control device 200 are stacked to form a photovoltaic energy storage system, they are plugged into the third plug-in port 220 through the first plug-in port 120, and the distribution position and quantity of the third operating terminal 221 and the third detecting terminal 222 on the third plug-in port 220 are corresponding to the first operating terminal 121 and the first detecting terminal 122 on the first plug-in port 120 to ensure that the third detecting terminal 222 is used to short-circuit the first detecting terminal 122, and the energy storage module 110 outputs the operating voltage through the first operating terminal 121 and transmits it to the power module 210 through the third operating terminal 221. The energy storage unit 100 starts to work normally only when it receives all the enable signals of the energy storage control device 200, that is, all the first detecting terminals 122 on the first plug-in port 120 are short-circuited by the third detecting terminals 222 on the third plug-in port 220, and the third detecting terminals 222 also include fixed and adjustable ones, with multiple guarantees, which greatly improves the electrical reliability of the energy storage unit 100 and the energy storage control device 200 during installation or uninstallation, reduces safety hazards, and ensures personnel safety.

It should be noted that in one or more embodiments, the stacking between the energy storage units 100 and between the energy storage units 100 and the energy storage control device 200 is for the purpose of facilitating placement, and the stacking direction and stacking form are not subject to excessive restrictions and are all within the protection scope of this application.

By setting multiple detecting terminal pairs on the plug-in port of the energy storage control device, including fixed detecting terminals and adjustable detecting terminals, and the terminals corresponding to the energy storage unit only start working when receiving the enable signal of each detecting terminal of the energy storage control device, so as to avoid electricity leakage and harm to personnel. In addition, the adjustable detecting terminal can be disconnected before the installation or disassembly of the energy storage system, thereby cutting off the output of the enable signal, and then reconnected after installation, further improving the electrical reliability of the energy storage system and reducing safety hazards. In addition, the detecting terminal is set shorter than other operating terminals, so that the connection time of the detecting terminal is later than the connection time of the operating terminal, and the disconnection time is earlier than the disconnection time of the operating terminal, so as to avoid the detecting terminal from accidentally touching the energy storage unit to output voltage and causing harm to personnel.

It is obvious to those skilled in the art that the present application is not limited to the details of the above exemplary embodiments, and that the present application can be implemented in other specific forms without departing from the spirit or essential features of the present application.

The above embodiments are only used to illustrate the technical solution of the present application and are not intended to limit it. Although the present application has been described in detail with reference to the preferred embodiments, a person skilled in the art should understand that the technical solution of the present application may be modified or replaced by equivalents without departing from the scope of the technical solution of the present application.

## Claims

1. A photovoltaic energy storage system, comprising:
at least two modularized chambers;
a power conversion system coupled to a DC bus; and
at least one of a photovoltaic module, an energy storage module, and a DC charging module, the at least one of the photovoltaic module, the energy storage module, and the DC charging module coupled to the DC bus;
wherein the power conversion system is disposed in a first one of the modularized chambers; and at least one of the photovoltaic module, the energy storage module, and the DC charging module is disposed in a second one of the modularized chambers.

2. The photovoltaic energy storage system according to claim 1, wherein the modularized chamber is provided with a DC bus plug-in port, and the modularized chambers are connected through the DC bus after being assembled.

3. The photovoltaic energy storage system according to claim 2, wherein the modularized chamber provided with the energy storage module includes:
a first plug-in port including a first operating terminal and first detecting terminals,
wherein
the first detecting terminals are disposed in pairs,
a control device is provided between the first operating terminal, the first detecting terminal, and the energy storage module, and
the control device is configured to enable the energy storage module to be connected to the first operating terminal when the first detecting terminals are short-circuited, and to disconnect the energy storage module from the first operating terminal when the first detecting terminals are disconnected from each other.

4. The photovoltaic energy storage system according to claim 3, wherein at least two pairs of the first detecting terminals are provided, and the control device is configured to enable the energy storage module to be connected to the first operating terminal when each pair of the first detecting terminals is short-circuited, and to disconnect the energy storage module from the first operating terminal when any pair of the detecting terminals is disconnected.

5. The photovoltaic energy storage system according to claim 3, further comprising:
a second plug-in port including a second operating terminal and second detecting terminals,
wherein
the second detecting terminals are disposed in pairs,
the number and arrangement of the second operating terminal are consistent with the number and arrangement of the first operating terminal,
the number and arrangement of the second detecting terminals are consistent with the number and arrangement of the first detecting terminals, and
the second operating terminals are electrically connected to the first operating terminal or the energy storage module.

6. The photovoltaic energy storage system according to claim 5, wherein the second detecting terminal is electrically connected to the first detecting terminal; or the second detecting terminals are short-circuited with each other.

7. The photovoltaic energy storage system according to claim 5, wherein a length of at least one of the second detecting terminals is smaller than a length of the second operating terminal.

8. The photovoltaic energy storage system according to claim 3, wherein a length of at least one of the first detecting terminals is smaller than a length of the first operating terminal.

9. The photovoltaic energy storage system according to claim 3, wherein the modularized chamber provided with the power conversion system includes:
a third plug-in port, including a third operating terminal and third detecting terminals,
wherein
the third detecting terminals are disposed in pairs; and
the third detecting terminals are short-circuited with each other, or the third detecting terminals are configured to be switchable between short-circuited and disconnected states.

10. The photovoltaic energy storage system according to claim 9, wherein at least two pairs of the third detecting terminals are provided.

11. The photovoltaic energy storage system according to claim 10, wherein at least one pair of the third detecting terminals is configured to be switchable between short-circuited and disconnected states.

12. The photovoltaic energy storage system according to claim 9, wherein the length of at least one of the third detecting terminals is smaller than the length of the third operating terminal.

13. The photovoltaic energy storage system according to claim 1, wherein the energy storage module includes an energy storage battery and a bidirectional DCDC converter, and the energy storage battery is connected to the DC bus through the bidirectional DCDC converter.

14. The photovoltaic energy storage system according to claim 1, comprising:
three modularized chambers; and
the power conversion system, the photovoltaic module, the energy storage module, and the DC charging module coupled to the DC bus,
wherein
the power conversion system and the photovoltaic module are disposed in a first one of the modularized chambers;
the energy storage module is disposed in a second one of the modularized chambers;
the DC charging module is disposed in a third one of the modularized chambers.

15. The photovoltaic energy storage system according to claim 1, comprising:
three modularized chambers; and
the power conversion system, the photovoltaic modules, the energy storage module, and the DC charging module coupled to the DC bus,
wherein
the power conversion system is disposed in a first one of the modularized chambers;
the energy storage module and one photovoltaic module are disposed in a second one of the modularized chambers;
the DC charging module and another photovoltaic module are disposed in a third one of the modularized chambers.

16. The photovoltaic energy storage system according to claim 1 or 15, wherein a photovoltaic module is also disposed in the first one of the modularized chambers in which the power conversion system is arranged.

17. A photovoltaic energy storage system, comprising:
at least two modularized chambers;
a power conversion system coupled to a DC bus; and
at least one of a photovoltaic module, an energy storage module, and a DC charging module; the at least one of the photovoltaic module, the energy storage module, and the DC charging module coupled to the DC bus;
wherein the power conversion system is disposed in a first one of the modularized chambers;
at least one of the photovoltaic module, the energy storage module, and the DC charging module is disposed in a second one of the modularized chambers; and
the number of the energy storage module is greater than or equal to the number of the photovoltaic module, or the number of the energy storage module is greater than or equal to the number of the DC charging module.

18. A photovoltaic energy storage system, comprising:
a photovoltaic component; and
a power conversion system, a photovoltaic module, and an energy storage module coupled to a DC bus,
wherein
the power conversion system is disposed in a first one of modularized chambers and is externally connected to an AC power grid,
the energy storage module is disposed in a second one of the modularized chambers, and
the photovoltaic module is connected to the photovoltaic component, the photovoltaic module is disposed in a same modularized chamber with the power conversion system or the energy storage module, or the photovoltaic module is disposed in a third one of the modularized chambers.

19. A photovoltaic energy storage system, comprising:
a photovoltaic component;
an AC power grid; and
a power conversion system, a photovoltaic module, and an energy storage module coupled to a DC bus,
wherein the power conversion system is connected to the AC power grid, and the power conversion system is disposed in a first one of modularized chambers,
the energy storage module is disposed in a second one of the modularized chambers, and
the photovoltaic module is connected to the photovoltaic component, the photovoltaic module is disposed in a same modularized chamber with the power conversion system or the energy storage module, or the photovoltaic module is disposed in a third one of the modularized chambers.

20. The photovoltaic energy storage system according to claim 18 or 19, further comprising:
a DC charging module coupled to the DC bus,
wherein the DC charging module is disposed in a same modularized chamber with one of the power conversion system, the energy storage module, and the photovoltaic module, or the DC charging module is disposed in a fourth one of the modularized chambers.
